# EUROPÄISCHE PATENTSCHRIFT

(11) **EP 1 032 757 B1**
(45) Veröffentlichungstag und Bekanntmachung des Hinweises auf die Patenterteilung: **28.04.2004**
(21) Anmeldenummer: 99939931.4
(22) Anmeldetag: 23.06.1999
(51) Int. Cl.: F02D 35/00

(54) **VERFAHREN ZUM BETREIBEN EINER BRENNKRAFTMASCHINE INSBESONDERE EINES KRAFTFAHRZEUGS**
METHOD FOR OPERATING AN INTERNAL COMBUSTION ENGINE, ESPECIALLY AN INTERNAL COMBUSTION ENGINE IN A MOTOR VEHICLE
PROCEDE PERMETTANT DE FAIRE FONCTIONNER UN MOTEUR A COMBUSTION INTERNE, EN PARTICULIER D'UN VEHICULE AUTOMOBILE

(30) Priorität: 27.06.1998 DE 19828774
(43) Veröffentlichungstag der Anmeldung: 06.09.2000
(73) Patentinhaber: ROBERT BOSCH GMBH, 70442 Stuttgart (DE)
(72) Erfinder: ESTEGHLAL, Gholamabas, D-71642 Ludwigsburg (DE); MALLEBREIN, Georg, D-70825 Korntal-Münchingen (DE)
(86) Internationale Anmeldenummer: PCT/DE1999/001822
(87) Internationale Veröffentlichungsnummer: WO 2000/000727

(56) Entgegenhaltungen:
- EP-A- 0 488 254
- US-A- 5 706 789
- PATENT ABSTRACTS OF JAPAN vol. 1999, no. 03, 31. März 1999 (1999-03-31) & JP 10 331728 A (NISSAN MOTOR CO LTD), 15. Dezember 1998 (1998-12-15)

## Beschreibung

### Stand der Technik

Die Erfindung betrifft ein Verfahren zum Betreiben einer Brennkraftmaschine insbesondere eines Kraftfahrzeugs nach dem Oberbegriff des Anspruchs 1. Des Weiteren betrifft die Erfindung ein Computerprogramm, ein Steuergerät und eine Brennkraftmaschine insbesondere für ein Kraftfahrzeug in entsprechender Weise.

Ein derartiges System zur direkten Einspritzung von Kraftstoff in den Brennraum einer Brennkraftmaschine ist aus der EP-A-488 254 bekannt.

Bei derartigen Systemen wird ein sogenannter Schichtbetrieb und ein sogenannter Homogenbetrieb unterschieden. Der Schichtbetrieb wird insbesondere bei kleineren Lasten verwendet, während der Homogenbetrieb bei größeren, an der Brennkraftmaschine anliegenden Lasten zur Anwendung kommt.

Im Schichtbetrieb wird der Kraftstoff während der Verdichtungsphase der Brennkraftmaschine in den Brennraum derart eingespritzt, daß sich im Zeitpunkt der Zündung eine Kraftstoffwolke in unmittelbarer Umgebung einer Zündkerze befindet. Diese Einspritzung kann auf unterschiedliche Weise erfolgen. So ist es möglich, daß die eingespritzte Kraftstoffwolke sich bereits während bzw. unmittelbar nach der Einspritzung bei der Zündkerze befindet und von dieser entzündet wird. Ebenfalls ist es möglich, daß die eingespritzte Kraftstoffwolke durch eine Ladungsbewegung zu der Zündkerze geführt und dann erst entzündet wird. Bei beiden Brennverfahren liegt keine gleichmäßige Kraftstoffverteilung vor, sondern eine Schichtladung.

Der Vorteil des Schichtbetriebs liegt darin, daß dort mit einer sehr geringen Kraftstoffmenge die anliegenden kleineren Lasten von der Brennkraftmaschine ausgeführt werden können. Größere Lasten können allerdings nicht durch den Schichtbetrieb erfüllt werden.

Im für derartige größere Lasten vorgesehenen Homogenbetrieb wird der Kraftstoff während der Ansaugphase der Brennkraftmaschine eingespritzt, so daß eine Verwirbelung und damit eine Verteilung des Kraftstoffs in dem Brennraum noch ohne weiteres erfolgen kann. Insoweit entspricht der Homogenbetrieb etwa der Betriebsweise von Brennkraftmaschinen, bei denen in herkömmlicher Weise Kraftstoff in das Ansaugrohr eingespritzt wird. Bei Bedarf kann auch bei kleineren Lasten der Homogenbetrieb eingesetzt werden.

Im Schichtbetrieb wird die Drosselklappe in dem zu dem Brennraum führenden Ansaugrohr weit geöffnet und die Verbrennung wird im wesentlichen nur durch die einzuspritzende Kraftstoffmasse gesteuert und/oder geregelt. Im Homogenbetrieb wird die Drosselklappe in Abhängigkeit von dem angeforderten Moment geöffnet bzw. geschlossen und die einzuspritzende Kraftstoffmasse wird in Abhängigkeit von der angesaugten Luftmasse gesteuert und/oder geregelt.

In beiden Betriebsarten, also im Schichtbetrieb und im Homogenbetrieb, wird die einzuspritzende Kraftstoffmasse in Abhängigkeit zusätzlich von einer Mehrzahl weiterer Eingangsgrößen auf einen im Hinblick auf Kraftstoffeinsparung, Abgasreduzierung und dergleichen optimalen Wert gesteuert und/oder geregelt. Die Steuerung und/oder Regelung ist dabei in den beiden Betriebsarten unterschiedlich.

Es ist möglich, die beiden beschriebenen Betriebsarten miteinander zu kombinieren. Dies wird als sogenannte Doppeleinspritzung bezeichnet. Hierzu wird die insgesamt einzuspritzende Kraftstoffmasse ermittelt. Dann wird ein erster Teil der einzuspritzenden Kraftstoffmasse während der Ansaugphase und der übrige zweite Teil der einzuspritzenden Kraftstoffmasse direkt danach während der Verdichtungsphase in den Brennraum eingespritzt. Die einzuspritzende Kraftstoffmasse für ein- und dieselbe Verbrennung wird also mit Hilfe von zwei Einspritzungen in den Brennraum der Brennkraftmaschine eingespritzt.

Der Vorteil einer derartigen Doppeleinspritzung besteht darin, daß ein "abruptes" Umschalten zwischen den beiden Betriebsarten, also zwischen dem Homogenbetrieb und dem Schichtbetrieb und zurück, vermieden wird. Statt dessen kann das Umschalten über einen breiten Bereich "verwischt" werden, indem beispielsweise die während der Ansaugphase eingespritzte Kraftstoffmasse langsam vermindert und die während der Verdichtungsphase eingespritzte Kraftstoffmasse langsam vergrößert wird.

Ebenfalls ist es möglich, bei der Brennkraftmaschine eine Tankentlüftung vorzusehen. Dabei wird das in einem Kraftstofftank verdampfte sogenannte Regeneriergas aufgefangen und der Verbrennung zugeführt. Der Vorteil einer derartigen Tankentlüftung besteht darin, dass der in dem Regeneriergas enthaltene Kraftstoff nicht ins Freie entweicht, sondern von der Brennkraftmaschine verwertet wird.

Aufgabe der Erfindung ist es, ein Verfahren zum Betreiben einer Brennkraftmaschine sowie eine Brennkraftmaschine zu schaffen, bei der die Vorteile der Doppeleinspritzung und der Tankentlüftung besser ausgenutzt sind.

Diese Aufgabe wird bei einem Verfahren der eingangs genannten Art erfindungsgemäß durch die Merkmale des kennzeichnenden Teils des Anspruchs 1 gelöst. Bei einem Computerprogramm, einem Steuergerät und einer Brennkraftmaschine der eingangs genannten Art wird die Aufgabe erfindungsgemäß entsprechend gelöst.

Durch die Zuführung des Regeneriergases während der Ansaugphase wird die Aufteilung der gesamten einzuspritzenden Kraftstoffmasse auf die Ansaugphase und die Verdichtungsphase nicht beeinflusst oder gar gestört. Die Genauigkeit insbesondere der während der Verdichtungsphase einzuspritzenden Kraftstoffmasse wird also ungemindert aufrechterhalten. Trotzdem wird der Vorteil erreicht, dass das Regeneriergas dem Brennraum und damit der Verbrennung zugeführt wird. Die Erfindung verbindet somit die Vorteile der direkten Einspritzung, insbesondere den geringeren Kraftstoffverbrauch und den niedrigeren Schadstoffausstoß des Schichtbetriebs, mit den Vorteilen der Tankentlüftung, insbesondere der vollständigen Verwertung auch von verdampfendem Kraftstoff.

Dem Brennraum wird also während der Ansaugphase Kraftstoff eingespritzt und Regeneriergas zugeführt, und während der Verdichtungsphase Kraftstoff eingespritzt, aber kein Regeneriergas zugeführt. Die in den Brennraum insgesamt während einer einzigen Verbrennung zugeführte Kraftstoffmasse wird dabei aus einem ersten, während der Ansaugphase zugeführten Teil und aus einem zweiten, während der Verdichtungsphase eingespritzten Teil zusammengesetzt, und es wird der erste Teil aus einem dritten, eingespritzten Teil und aus einem vierten, aus dem Regeneriergas bestehenden Teil zusammengesetzt.

Dabei wird bei dem ersten Teil der insgesamt zugeführten Kraftstoffmasse der dritte, eingespritzte Teil vermindert und der vierte, aus dem Regeneriergas bestehende Teil vergrößert, wobei dem Brennraum möglichst so viel Regeneriergas zugeführt wird, dass der dritte, eingespritzte Teil einen Mindestwert oder Null erreicht.

Damit wird erreicht, dass möglichst viel verdampfter Kraftstoff dem Brennraum der Brennkraftmaschine zugeführt wird. Die Verwertung des verdampften Kraftstoffes wird damit optimiert.

Von besonderer Bedeutung ist die Realisierung des erfindungsgemäßen Verfahrens in der Form eines Steuerelements, das für ein Steuergerät einer Brennkraftmaschine, insbesondere eines Kraftfahrzeugs, vorgesehen ist. Dabei ist auf dem Steuerelement ein Programm abgespeichert, das auf einem Rechengerät, insbesondere auf einem Mikroprozessor, ablauffähig und zur

Ausführung des erfindungsgemäßen Verfahrens geeignet ist. In diesem Fall wird also die Erfindung durch ein auf dem Steuerelement abgespeichertes Programm realisiert, so daß dieses mit dem Programm versehene Steuerelement in gleicher Weise die Erfindung darstellt wie das Verfahren, zu dessen Ausführung das Programm geeignet ist. Als Steuerelement kann insbesondere ein elektrisches Speichermedium zur Anwendung kommen, beispielsweise ein Read-Only-Memory.

Weitere Merkmale, Anwendungsmöglichkeiten und Vorteile der Erfindung ergeben sich aus der nachfolgenden Beschreibung von Ausführungsbeispielen der Erfindung, die in den Figuren der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in der Zeichnung.
- Figur 1: zeigt eine schematische Darstellung eines Ausführungsbeispiels einer erfindungsgemäßen Brennkraftmaschine, und
- Figur 2: zeigt eine schematische Darstellung eines Ausführungsbeispiels einer Aufteilung der eingespritzten Kraftstoffmasse nach dem erfindungsgemäßen Verfahren.

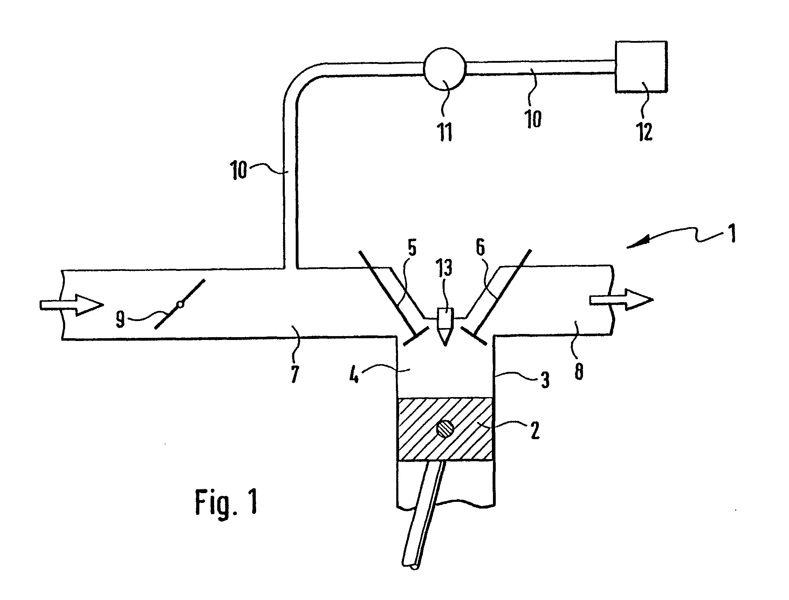

In der Figur 1 ist eine Brennkraftmaschine 1 eines Kraftfahrzeugs dargestellt, bei der ein Kolben 2 in einem Zylinder 3 hin- und herbewegbar ist. Der Zylinder 3 ist mit einem Brennraum 4 versehen, der unter anderem durch den Kolben 2, ein Einlaßventil 5 und ein Auslaßventil 6 begrenzt ist. Mit dem Einlaßventil 5 ist ein Ansaugrohr 7 und mit dem Auslaßventil 6 ist ein Abgasrohr 8 gekoppelt.

Ebenfalls sind dem Brennraum 4 ein Einspritzventil und eine ggf. Zündkerze zugeordnet.

In dem Ansaugrohr 7 ist eine drehbare Drosselklappe 9 untergebracht, über die dem Ansaugrohr 7 Luft zuführbar ist. Die Menge der zugeführten Luft ist abhängig von der Winkelstellung der Drosselklappe 9.

Zwischen der Drosselklappe 9 und dem Brennraum 4 mündet eine Tankentlüftungsleitung 10 in das Ansaugrohr 7. Die Tankentlüftungsleitung 10 ist über ein Tankentlüftungsventil 11 mit einem Aktivkohlefilter 12 verbunden. Über die Tankentlüftungsleitung 10 kann Regeneriergas, das in einem Kraftstofftank des Kraftfahrzeugs verdampft und in dem Aktivkohlefilter 12 aufgefangen worden ist, dem Ansaugrohr 7 zugeführt werden. Die Menge des zugeführten Regeneriergases ist abhängig von der Stellung des Tankentlüftungsventils 11.

Dem Zylinder 3 ist ein Einspritzventil 13 zugeordnet, mit dem Kraftstoff in den Brennraum 4 der Brennkraftmaschine 1 eingespritzt werden kann. Ebenfalls ist eine Zündkerze in den Zylinder 3 eingeschraubt, mit der der eingespritzte Kraftstoff entzündet werden kann.

In einem sogenannten Schichtbetrieb der Brennkraftmaschine 1, wird die Drosselklappe 9 weit geöffnet. Der Kraftstoff wird von dem Einspritzventil 13 während einer durch den Kolben 2 hervorgerufenen Verdichtungsphase in den Brennraum 4 eingespritzt, und zwar örtlich in die unmittelbare Umgebung der Zündkerze sowie zeitlich in geeignetem Abstand vor dem Zündzeitpunkt. Dann wird mit Hilfe der Zündkerze der Kraftstoff entzündet, so daß der Kolben 2 in der nunmehr folgenden Arbeitsphase durch die Ausdehnung des entzündeten Kraftstoffs angetrieben wird.

In einem sogenannten Homogenbetrieb der Brennkraftmaschine 1 wird die Drosselklappe 9 in Abhängigkeit von der erwünschten, zugeführten Luftmasse teilweise geöffnet bzw. geschlossen. Der Kraftstoff wird von dem Einspritzventil 13 während einer durch den Kolben 2 hervorgerufenen Ansaugphase in den Brennraum 4 eingespritzt. Durch die gleichzeitig angesaugte Luft wird der eingespritzte Kraftstoff verwirbelt und damit in dem Brennraum 4 im wesentlichen gleichmäßig verteilt. Danach wird das Kraftstoff/Luft-Gemisch während der Verdichtungsphase verdichtet, um dann von der Zündkerze entzündet zu werden. Durch die Ausdehnung des entzündeten Kraftstoffs wird der Kolben 2 angetrieben.

Als weitere Betriebsart der Brennkraftmaschine 1 ist eine sogenannte Doppeleinspritzung vorgesehen. Bei dieser Betriebsart wird für eine einzige Verbrennung während der Ansaugphase und während der Verdichtungsphase Kraftstoff in den Brennraum 4 der Brennkraftmaschine 1 eingespritzt.

Die Doppeleinspritzung kann dazu verwendet werden, um in einem Übergangsbereich vom Schichtbetrieb in den Homogenbetrieb und zurück umzuschalten. Ebenfalls ist es jedoch möglich, die Brennkraftmaschine 1 in ihrem gesamten Betriebsbereich mit der beschriebenen Doppeleinspritzung zu betreiben. In diesem Fall können durch eine entsprechende Beeinflussung des während der Ansaugpahse und während der Verdichtungsphase eingespritzten Kraftstoffes die jeweiligen Vorteile des Schichtbetriebs und des Homogenbetriebs erreicht werden.

Die im Schichtbetrieb, im Homogenbetrieb und bei der Doppeleinspritzung von dem Einspritzventil 13 in den Brennraum 4 eingespritzte Kraftstoffmasse wird von einem Steuergerät insbesondere im Hinblick auf einen geringen Kraftstoffverbrauch und/oder eine geringe Schadstoffentwicklung gesteuert und/oder geregelt. Zu diesem Zweck ist das Steuergerät mit einem Mikroprozessor versehen, der in einem Speichermedium, insbesondere in einem Read-Only-Memory ein Programm abgespeichert hat, das dazu geeignet ist, die genannte Steuerung und/oder Regelung durchzuführen.

Das Steuergerät ist von Eingangssignalen beaufschlagt, die mittels Sensoren gemessene Betriebsgrößen der Brennkraftmaschine 1 darstellen. Beispielsweise ist das Steuergerät mit einem Luftmassensensor, einem Lambda-Sensor und einem Drehzahlsensor verbunden. Des weiteren ist das Steuergerät mit einem Fahrpedalsensor verbunden, der ein Signal erzeugt, das die Stellung eines von einem Fahrer betätigbaren Fahrpedals angibt. Das Steuergerät erzeugt Ausgangssignale, mit denen über Aktoren das Verhalten der Brennkraftmaschine 1 entsprechend der erwünschten Steuerung und/oder Regelung beeinflußt werden kann. Beispielsweise ist das Steuergerät mit dem Einspritzventil 13, der Zündkerze und der Drosselklappe 9 verbunden und erzeugt die zu deren Ansteuerung erforderlichen Signale.

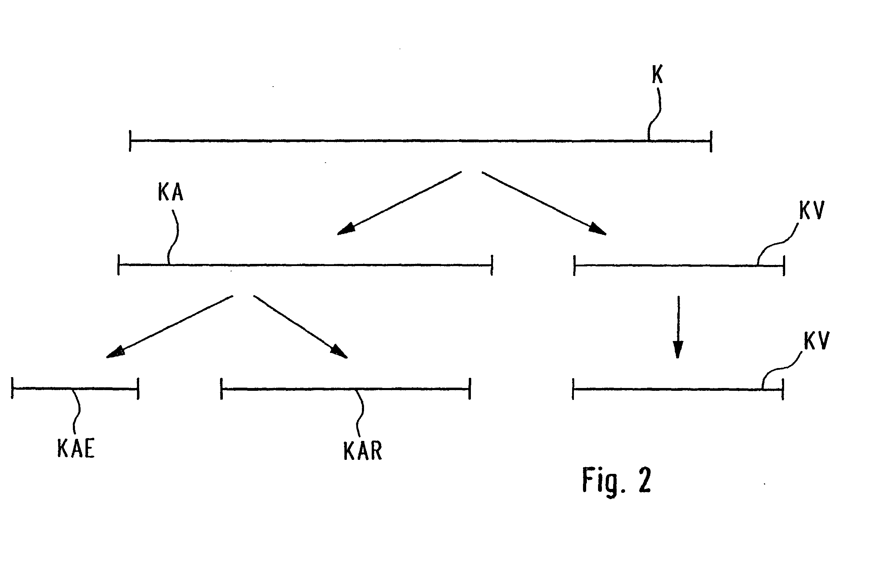

Von dem Steuergerät wird das nachfolgend anhand der Figur 2 beschriebene, den Betriebszustand der Doppeleinspritzung betreffende Verfahren zum Aufteilen der Kraftstoffmasse auf die Ansaugphase und auf die Verdichtungsphase durchgeführt.

Zuerst ermittelt das Steuergerät in Abhängigkeit von den aktuellen Betriebsgrößen der Brennkraftmaschine 1, wieviel Krafstoff bei der nächsten Verbrennung dem Brennraum 4 zugeführt werden muß. Diese gesamte Kraftstoffmasse ist in der Figur 2 mit K gekennzeichnet und symbolisch dargestellt.

Danach ermittelt das Steuergerät, wieviel Kraftstoff der gesamten Krafstoffmasse K während der Ansaugphase und während der Verdichtungsphase für diese nächste Verbrennung dem Brennraum 4 zugeführt werden muß. Diese Aufteilung ist insbesondere abhängig von dem von dem Fahrer über das Fahrpedal angeforderten Moment. Je größer das angeforderte Moment ist, desto größer ist der Kraftstoffanteil, der während der Ansaugphase zugeführt werden muß. Befindet sich die Brennkraftmaschine 1 hingegen im Leerlauf, so ist der während der Ansaugphase zuzuführende Kraftstoffanteil relativ gering oder gar Null und es wird der erforderliche Kraftstoff während der Verdichtungsphase eingespritzt.

In der Figur 2 ist diese Aufteilung symbolisch und beispielhaft durch die während der Ansaugphase zugeführte Kraftstoffmasse KA und die während der Verdichtungsphase eingespritzte Kraftstoffmasse KV dargestellt. Die insgesamt zugeführte Kraftstoffmasse K ist damit in einen ersten Teil KA während der Ansaugphase und einen zweiten Teil KV während der Verdichtungsphase aufgeteilt.

Die während der Ansaugphase zugeführte Kraftstoffmasse KA wird von dem Steuergerät aus zwei weiteren Teilen zusammengesetzt, und zwar aus einem dritten, über das Einspritzventil 9 eingespritzten Teil KAE und einem vierten, aus Regeneriergas bestehendem Teil KAR. Auch dies ist symbolisch und beispielhaft in der Figur 2 dargestellt.

Die während der Verdichtungsphase eingespritzte Kraftstoffmasse KV enthält keinen Anteil Regeneriergas und wird vollständig über das Einspritzventil 9 eingespritzt.

Die Aufteilung der während der Ansaugphase dem Brennraum 4 zugeführten Kraftstoffmasse KA in die eingespritzte Kraftstoffmasse KAE und die aus dem Regeneriergas bestehende Kraftstoffmasse KAR wird derart durchgeführt, daß möglichst viel Kraftstoff über das Regeneriergas zugeführt wird. Es wird also das Tankentlüftungsventil 11 möglichst weit geöffnet, so daß der dritte, aus Regeneriergas bestehende Teil KAR möglichst groß und der über das Einspritzventil 9 eingespritzte Teil KAE möglichst klein oder einen Mindestwert oder gar Null wird.

Im Betriebszustand der Doppeleinspritzung wird also die für die nächste Verbrennung während der Ansaugphase zuzuführende Kraftstoffmasse KA aus der eingespritzten Kraftstoffmasse KAE und der aus Regeneriergas bestehenden Kraftstoffmasse KAR zusammengesetzt. Die für diese nächste Verbrennung während der Verdichtungsphase zuzuführende Kraftstoffmasse KV wird über das Einspritzventil 9 eingespritzt und enthält keinen Regeneriergasanteil. Aus der während der Ansaugphase zugeführten Kraftstoffmasse KA und der während der Verdichtungsphase eingespritzten Kraftstoffmasse KV setzt sich die gesamte Kraftstoffmasse K für die genannte Verbrennung zusammen.

## Patentansprüche

1. Verfahren zum Betreiben einer Brennkraftmaschine (1) insbesondere eines Kraftfahrzeugs, bei dem der für eine Verbrennung einzuspritzende Kraftstoff während einer Ansaugphase und während einer Verdichtungsphase direkt in einen Brennraum (4) eingespritzt wird, und bei dem die in den Brennraum (4) insgesamt während einer einzigen Verbrennung zugeführte Kraftstoffmasse (K) aus einem ersten, während der Ansaugphase zugeführten Teil (KA) und aus einem zweiten, während der Verdichtungsphase eingespritzten Teil (KV) zusammengesetzt wird, wobei der erste Teil (KA) aus einem dritten, eingespritzten Teil und aus einem vierten, aus dem Regeneriergas bestehenden Teil zusammengesetzt wird, **dadurch gekennzeichnet, dass** bei dem ersten Teil (KA) der insgesamt zugeführten Kraftstoffmasse (K) der dritte, eingespritzte Teil (KAE) vermindert und der vierte, aus dem Regeneriergas bestehende Teil (KAR) vergrößert wird, wobei dem Brennraum (4) möglichst so viel Regeneriergas zugeführt wird, dass der dritte, eingespritzte Teil (KAE) einen Mindestwert oder Null erreicht.

2. Computerprogramm für ein Steuergerät einer Brennkraftmaschine (1), insbesondere eines Kraftfahrzeugs, programmiert zur Durchführung des Verfahrens nach dem Anspruch 1.

3. Steuergerät für eine Brennkraftmaschine (1) insbesondere eines Kraftfahrzeugs, hergerichtet zur Durchführung des Verfahrens nach dem Anspruch 1.

4. Brennkraftmaschine (1) insbesondere für ein Kraftfahrzeug, mit einem Steuergerät, das zur Durchführung des Verfahrens nach dem Anspruch 1 hergerichtet ist.

## Claims

1. Method for operating an internal combustion engine (1), in particular of a motor vehicle, in which the fuel which is to be injected for combustion is injected directly into a combustion chamber (4) during an induction phase and during a compression phase, and in which the total fuel mass (K) fed into the combustion chamber (4) during a single combustion cycle is composed of a first part (KA), which is supplied during the induction phase, and of a second part (KV), which is injected during the compression phase, the first part (KA) being composed of a third, injected part and of a fourth part consisting of the regeneration gas, **characterized in that**, in the first part (KA) of the total fuel mass (K) supplied, the third, injected part (KAE) is reduced and the fourth part (KAR), which consists of the regeneration gas, is increased, with as far as possible so much regeneration gas being fed to the combustion chamber (4) that the third, injected part (KAE) reaches a minimum value or zero.

2. Computer program for a control unit of an internal combustion engine (1), in particular of a motor vehicle, programmed to carry out the method according to Claim 1.

3. Control unit for an internal combustion engine (1), in particular of a motor vehicle, designed to carry out the method according to Claim 1.

## Revendications

1. Procédé pour faire fonctionner un moteur à combustion interne (1), en particulier d'un véhicule automobile, dans lequel le carburant à injecter pour une combustion est directement injecté dans une chambre de combustion (4) pendant une phase d'admission et pendant une phase de compression et dans lequel la masse de carburant totale (K) acheminée dans la chambre de combustion, (4) pendant une unique combustion est composée d'une première partie (KA) acheminée pendant la phase d'admission et d'une deuxième partie (KV) acheminée pendant la phase de compression, la première partie (KA) étant composée d'une troisième partie, injectée, et d'une quatrième partie, constituée par le gaz de récupération,
**caractérisé en ce que**
dans la première partie (KA) de la masse de carburant totale (K) acheminée, la troisième partie, injectée, (KAE) est diminuée et la quatrième partie (KAR), constituée par le gaz de récupération, est augmentée, la quantité de gaz de récupération acheminée à la chambre de combustion (4) étant autant que possible assez grande pour que la troisième partie, injectée, (KAE) atteigne une valeur minimale ou nulle.

2. Programme d'ordinateur pour un appareil de commande d'un moteur à combustion interne (1), en particulier d'un véhicule automobile, programmé pour la mise en oeuvre du procédé selon la revendication 1.

3. Appareil de commande pour un moteur à combustion interne (1), en particulier d'un véhicule automobile, préparé pour la mise en oeuvre du procédé selon la revendication 1.

4. Moteur à combustion interne (1), en particulier pour un véhicule automobile, comprenant un appareil de commande qui est préparé pour la mise en oeuvre du procédé selon la revendication 1.
